# EUROPÄISCHE PATENTSCHRIFT

(11) **EP 1 516 793 B1**
(45) Veröffentlichungstag und Bekanntmachung des Hinweises auf die Patenterteilung: **13.12.2006**
(21) Anmeldenummer: 04021929.7
(22) Anmeldetag: 15.09.2004
(51) Int. Cl.: B60T 8/32, B60T 13/57

(54) **Bremskraftverstärker mit Notbremsassistentfunktion**
Brake booster with emergency braking assistance function
Servofrein avec fonction d'assistance de freinage d'urgence

(30) Priorität: 22.09.2003 DE 10343834
(43) Veröffentlichungstag der Anmeldung: 23.03.2005
(73) Patentinhaber: Lucas Automotive GmbH, 56070 Koblenz (DE)
(72) Erfinder: Schlüter, Peter, 56206 Kammerforst (DE); Suescun, Alfonso Goni, 31008 Pamplona (ES); Vitas, Pedro Luis Lòpez, 31016 Mendillorri-Pamplona, Navarra (ES); Petrina, Alberto, Puente la Reina, Navarra (ES)
(74) Vertreter: Beyer, Andreas

(56) Entgegenhaltungen:
- EP-B- 0 901 950
- WO-A-00/13953
- WO-A-99/26826
- US-A1- 2002 056 362
- US-A1- 2002 069 751
- PATENT ABSTRACTS OF JAPAN Bd. 1998, Nr. 08, 30. Juni 1998 (1998-06-30) -& JP 10 059164 A (JIDOSHA KIKI CO LTD), 3. März 1998 (1998-03-03)
- PATENT ABSTRACTS OF JAPAN Bd. 1997, Nr. 04, 30. April 1997 (1997-04-30) -& JP 08 318846 A (JIDOSHA KIKI CO LTD), 3. Dezember 1996 (1996-12-03)

## Beschreibung

Die vorliegende Erfindung betrifft Bremskraftverstärker, insbesondere für Kraftfahrzeuge, gemäß dem Oberbegriff des Patentanspruchs 1, wie sie z.B. aus der WO 99/26826 bekannt sind. Solche Bremskraftverstärker sind in der Regel als Unterdruckbremskraftverstärker ausgeführt und dienen dazu, dem Fahrer eines Fahrzeuges beim Bremsen eine Hilfskraft zur Verfügung zu stellen, um die vom Fahrer aufzubringende Bremsbetätigungskraft auf einem komfortablen Niveau zu halten. Es sind auch rein hydraulisch arbeitende Bremskraftverstärker bekannt und die vorliegende Erfindung ist deshalb nicht auf Unterdruckbremskraftverstärker beschränkt.

Unabhängig von der Art der Hilfskrafterzeugung, z.B. mittels Unterdruck oder auf hydraulische Art und Weise, weist ein Bremskraftverstärker üblicherweise ein Steuerventil zum Steuern der von ihm erzeugten Verstärkungskraft, also des Maßes der Hilfskraft, sowie ein Steuerventilgehäuse auf. In das Steuerventilgehäuse erstreckt sich zumindest teilweise ein Eingangsglied, mit Hilfe dessen ein Bremswunsch des Fahrers dem Bremskraftverstärker mitgeteilt wird. Die über das Eingangsglied in den Bremskraftverstärker eingeleitete Eingangskraft und die vom Bremskraftverstärker daraufhin erzeugte Hilfskraft werden an einem Ausgangsglied zusammengeführt und von diesem an einen dem Bremskraftverstärker nachgeschalteten Hauptzylinder einer hydraulischen Fahrzeugbremsanlage abgegeben. Ist der Bremskraftverstärker ein Unterdruckbremskraftverstärker, besteht das Ausgangsglied in der Regel aus einem gummielastischen Material in Scheibenform, das in einem Endstück des Steuerventilgehäuses eingekammert ist und sich flüssigkeitsähnlich verhält. Zwischen dem Ausgangsglied und dem Eingangsglied befindet sich ein relativ zum Steuerventilgehäuse axial bewegbares Druckstück. Die in einen Bremskraftverstärker eingeleitete Betätigungskraft fließt also über das Eingangsglied und von dort, gegebenenfalls über zwischengeschaltete Bauteile wie Ventilkolben oder ähnliches, zum Druckstück und weiter zum Ausgangsglied.

Schon seit längerem ist bekannt, dass die meisten Fahrer eines Kraftfahrzeuges in einer Notbremssituation die Bremse nicht stark genug betätigen. Dieses Verhalten ist insbesondere dann von Nachteil, wenn die Fahrzeugbremsanlage mit einem Antiblockiersystem ausgerüstet ist, denn die maximale Bremswirkung einer mit Antiblockiersystem ausgerüsteten Bremsanlage kann nur erreicht werden, wenn jedes Fahrzeugrad beim Bremsen in einen schlupfgeregelten Zustand gerät, d.h. wenn jedes Fahrzeugrad so stark abgebremst wird, dass die Schlupfregelung des Antiblockiersystems aktiv wird. Dieser Zustand wird nur erreicht, wenn jedem Fahrzeugrad ein ausreichend hoher hydraulischer Betätigungsdruck zugeführt wird, was in der Praxis häufig nicht der Fall ist.

Als Lösung dieses Problems wurde eine in der Fachliteratur zumeist als "Bremsassistent" bezeichnete Einrichtung vorgeschlagen. Kurz gesagt sorgt dieser Bremsassistent dafür, dass in einer Notbremssituation, also dann, wenn das Eingangsglied sehr schnell relativ weit in Betätigungsrichtung bewegt wird, der Bremskraftverstärker seine maximale Hilfskraft zur Verfügung stellt. Frühe Bremsassistent-Lösungen verwendeten einen Elektromagnet, der nach Erkennen einer Notbremssituation das Luftsteuerventil eines Unterdruckbremskraftverstärkers unabhängig von der tatsächlichen Eingangskraft in Offenstellung hielt, so dass sich im Unterdruckbremskraftverstärker die maximale Druckdifferenz zwischen einer Unterdruckkammer und einer Arbeitskammer und damit die maximal mögliche Hilfskraft aufbauen konnte. Um ohne einen kostenaufwendigen Elektromagneten dieselbe Wirkung zu erreichen, schlagen spätere Lösungen vor, dass sich das bereits genannte Druckstück in einer Notbremssituation am Steuerventilgehäuse abstützt, so dass die vom Hauptzylinder in den Bremskraftverstärker zurück übertragenen hydraulischen Reaktionskräfte nicht auf das Eingangsglied des Bremskraftverstärkers und damit auf das Bremspedal zurückwirken, sondern vom Bremskraftverstärker aufgenommen werden. Auf diese Weise kann mit einer relativ geringen Eingangs- bzw. Betätigungskraft eine hohe Ausgangskraft erzielt werden, was in einer Notbremssituation erwünscht ist. Lösungen der zuletzt genannten Art sind aus der bereits erwähnten WO 99/26826 und der EP 0 901 950 B1 bekannt.

Die zuletzt angesprochenen Lösungen sind allerdings mechanisch relativ aufwendig und deshalb nicht viel kostengünstiger als die ebenfalls erwähnte elektromagnetische Lösung.

Aus der US 2002/0056362 A1 ist ein Unterdruckbremskraftverstärker bekannt, bei dem zur Realisierung einer Bremsassistent-Funktion eine Hülse des Steuerventils, die an ihrem einen Ende einen die Zufuhr von Atmosphärendruck in den Bremskraftverstärker steuernden Ventilsitz trägt, an ihrem anderen Ende mit einem einstückigen Federbauteil versehen ist, welches radial nach außen vorgespannte Federarme aufweist, die im Falle von ein bestimmtes Maß überschreitenden Relativbewegungen zwischen der Hülse und einem Steuerventilgehäuse in einer ringförmigen Ausnehmung des Steuerventilgehäuses verrasten, um die Hülse mit dem Steuerventilgehäuse zu koppeln und das Ventil offen zu halten, durch welches Atmosphärendruck in dem Bremskraftverstärker einströmt.

Der Erfindung liegt die Aufgabe zugrunde, einen Bremskraftverstärker mit Bremsassistentfunktion bereitzustellen, der mechanisch einfacher und damit kostengünstiger als bisher bekannte Lösungen ist.

Diese Aufgabe ist ausgehend von dem eingangs genannten Stand der Technik, der die Abstützung des Druckstücks realisiert, indem sich das Druckstück mittels eines von einer Feder vorgespannten Kupplungselementes lösbar an dem Steuerventilgehäuse abstützt, erfindungsgemäß dadurch gelöst, dass die Feder und das Kupplungselement als einstückiges Kopplungsbauteil ausgeführt sind, das im Steuerventilgehäuse radial beweglich bezüglich einer Hauptachse (Längsachse) des Steuerventils abgestützt ist. Ohne Beeinträchtigung der gewünschten Funktion wird auf diese Weise eine deutlich verminderte Komplexität des mechanischen Aufbaus und damit eine spürbare Kostenreduktion erreicht. Die radiale Beweglichkeit des Kopplungsbauteils ermöglicht es dem Kopplungsbauteil, sich selbsttätig in Bezug auf andere, mit dem Kopplungsbauteil zusammenwirkende Bauteile zu zentrieren, woraus eine größere Betriebssicherheit und geringere Anforderungen an die Fertigungsgenauigkeit des Kopplungsbauteils und mit ihm zusammenwirkender Bauteile resultieren.

Gemäß einer bevorzugten Ausgestaltung der Erfindung umgibt das Kopplungsbauteil einen mit dem Eingangsglied und dem Druckstück in Wirkverbindung stehenden Kopplungskolben konzentrisch. Der Kopplungskolben ist in direkter Kraftlinie zwischen dem Eingangsglied und dem Druckstück angeordnet und dient unter anderem dazu, die über das Eingangsglied eingeleitete Betätigungskraft zu dem Druckstück weiterzuleiten. Die Anordnung des Kopplungsbauteiles um einen solchen Kopplungskolben herum ist nicht nur platzsparend, sondern auch - wie noch erläutert werden wird - funktionell vorteilhaft. Das Druckstück und der Kopplungskolben können separate Bauteile sein, jedoch können diese beiden Teile ohne weiteres auch eine einstückige Einheit bilden.

Bei bevorzugten Ausführungsformen des erfindungsgemäßen Bremskraftverstärkers verjüngt sich das Kopplungsbauteil in Richtung des Druckstücks konisch. Bei solchen Ausgestaltungen weist das Kopplungsbauteil im Bereich seiner konischen Verjüngung vorzugsweise mehrere radial einwärts vorgespannte Federzungen auf. Bei einer solchen Ausführungsform übernehmen die Federzungen sowohl die Funktion der federnden Vorspannung als auch die Kopplungsfunktion.

Bei Ausführungsformen mit einem Kopplungsbauteil, das radial einwärts vorgespannte Federzungen aufweist, ist gemäß einer Ausgestaltung der Kopplungskolben mit Längsnuten versehen, in denen die freien Enden der Federzungen gleitend geführt sind. Bei solchen Ausführungsformen weist vorteilhaft jede Längsnut einen Rastvorsprung auf, hinter dem das freie Ende der zugehörigen Federzunge bei Überschreiten einer vorbestimmten Verschiebung des Druckstücks relativ zum Steuerventilgehäuse in Richtung auf das Ausgangsglied verrasten kann. Gemäß einer anderen Ausgestaltung gleiten die freien Enden der Federzungen auf dem Kopplungskolben nicht in speziell dafür vorgesehenen Längsnuten, sondern einfach auf einem Abschnitt der Mantelfläche des Kopplungskolbens. Bei einer solchen Ausgestaltung weist der Abschnitt der Mantelfläche des Kopplungskolbens einen Rastvorsprung auf, hinter dem die freien Enden der Federzungen bei Überschreiten einer vorbestimmten Verschiebung des Druckstücks relativ zum Steuerventilgehäuse in Richtung auf das Ausgangsglied verrasten. Dieser Rastvorsprung kann beispielsweise durch eine ringförmige Stufe gebildet sein, die sich bei einer Durchmesserverringerung des Kopplungskolbens ergibt.

Wie zuvor ausgeführt ist das Kopplungsbauteil radial schwimmend im Steuerventilgehäuse abgestützt. Um diese radiale Beweglichkeit sicherzustellen und gleichzeitig eine Beweglichkeit des Kopplungsbauteiles in axialer Richtung des Steuerventilgehäuses möglichst zu unterbinden, ist gemäß einer bevorzugten Ausgestaltung des erfindungsgemäßen Bremskraftverstärkers ein radial äußerer Umfangsrand des Kopplungsbauteils von im Steuerventilgehäuse vorhandenen Anschlägen in Richtung der Hauptachse im Wesentlichen ortsfest bezüglich des Steuerventilgehäuses gehalten. Im Sinne einer hohen Ansprechgenauigkeit der Bremsassistentfunktion sollten dabei die Anschläge so ausgestaltet sein, dass sie die radiale Beweglichkeit des Kopplungsbauteiles erlauben und zugleich dessen axialen Bewegungsspielraum minimieren.

Bei bevorzugten Ausführungsformen des erfindungsgemäßen Bremskraftverstärkers hat das Kopplungsbauteil einen insgesamt tellerförmigen Querschnitt. Mit "tellerförmigem Querschnitt" ist hier gemeint, dass das Kopplungsbauteil eine insgesamt relativ flache Gestalt hat, wobei die tellerförmige Vertiefung durch die Federzungen gebildet wird, die sich von dem radial äußeren Umfangsrand des Kopplungsbauteils nach innen erstrecken. Zwischen den einzelnen Federzungen existieren Zwischenräume. Um die Gefahr eines Durchbiegens oder Brechens der Federzungen des Kopplungsbauteiles bei hoher Last zu vermindern, ist gemäß einer bevorzugten Ausgestaltung ein Stützteil zwischen einem das Kopplungsbauteil entgegen der Betätigungsrichtung des Bremskraftverstärkers abstützenden Anschlags und dem Kopplungsbauteil angeordnet. Dieses Stützteil ist vorzugsweise so gestaltet, dass es die Federzungen auf zumindest im Wesentlichen ihrer gesamten Länge unterstützen kann. Das Stützteil weist deshalb dann, wenn das Kopplungsbauteil einen insgesamt tellerförmigen Querschnitt hat, ebenfalls einen zumindest annähernd tellerförmigen Querschnitt auf. Hat das Kopplungsbauteil eine andere Querschnittsform, dann sollte im Sinne einer guten Abstützung die dem Kopplungsbauteil zugewandte Fläche des Stützteils eine dazu passende Form aufweisen.

Bei einer bevorzugten Ausführungsform des erfindungsgemäßen Bremskraftverstärkers ist, um den oben erwähnten Verrastungszustand wieder lösen zu können, auf dem Kopplungskolben eine Entkoppelungshülse verschiebbar angeordnet, deren eines, dem Eingangsglied zugewandtes Ende dazu ausgebildet ist, sich an einem mit einem Ventilkolben verbundenen Querriegel abzustützen, und deren anderes Ende dazu ausgebildet ist, bei einer Verschiebung des Steuerventilgehäuses relativ zur Entkoppelungshülse in Richtung auf das Eingangsglied in Berührung mit dem Kopplungsbauteil zu geraten und die freien Enden der Federzungen radial auswärts zu drücken, um letztere aus ihrer Raststellung hinter dem Rastvorsprung oder den Rastvorsprüngen des Kopplungskolbens zu lösen. Um diese Aufgabe erfüllen zu können, muss die Entkoppelungshülse starr genug ausgeführt sein, d.h. sie muss der radial einwärts gerichteten Federvorspannung des Kopplungsbauteils ohne weiteres widerstehen können. Das dem Kopplungsbauteil zugewandte Ende der Entkoppelungshülse ist vorzugsweise kreisringförmig. Die Entkoppelungshülse ist vorzugsweise federnd in Richtung auf das Eingangsglied vorgespannt, so dass sie stets in Anlage an dem Querriegel gehalten ist. Zur einfachen Sicherstellung einer genauen Führung der Entkoppelungshülse ist letztere vorzugsweise in einem Bohrungsabschnitt des Steuerventilgehäuses gleitend aufgenommen.

An dem zuvor erwähnten Ventilkolben, der in der Regel unmittelbar mit dem Eingangsglied in Verbindung steht, ist ein Ventilsitz ausgebildet, der sogenannte Atmosphärendichtsitz, dessen durch eine Verschiebung des Eingangsgliedes in Betätigungsrichtung bewirktes Öffnen dazu führt, dass Atmosphärendruck in die Arbeitskammer eines Unterdruckbremskraftverstärkers einströmt und sich demzufolge eine Verstärkungskraft aufbaut.

Bei allen Ausführungsformen des erfindungsgemäßen Bremskraftverstärkers besteht das Kopplungsbauteil vorzugsweise aus Federstahl. Damit ist gewährleistet, dass das Kopplungsbauteil zum einen die gewünschte federnde Vorspannung erzeugt und zum anderen dazu in der Lage ist, die Abstützkräfte auf das Steuerventilgehäuse zu übertragen, ohne selbst zerstört zu werden.

Ein Ausführungsbeispiel eines erfindungsgemäßen Bremskraftverstärkers wird im folgenden anhand der beigefügten schematischen Figuren näher erläutert. Es zeigt:
- Figur 1: den hier interessierenden Bereich eines Steuerventils eines erfindungsgemäßen Bremskraftverstärkers im Längsschnitt, wobei Figur 1 eine Ausgangsstellung wiedergibt,
- Figur 2: ein in dem Steuerventil aus Figur 1 eingesetztes einstückiges Kopplungsbauteil und einen Teil eines damit zusammenwirkenden Kopplungskolbens in räumlicher Darstellung von seitlich vorne,
- Figur 3: das einstückige Kopplungsbauteil aus Figur 2 in einer anderen räumlichen Darstellung von seitlich hinten zusammen mit dem Kopplungskolben, und
- Figur 4: eine gegenüber Figur 1 etwas abgewandelte Ausführungsform eines erfindungsgemäßen Bremskraftverstärkers im Längsschnitt.

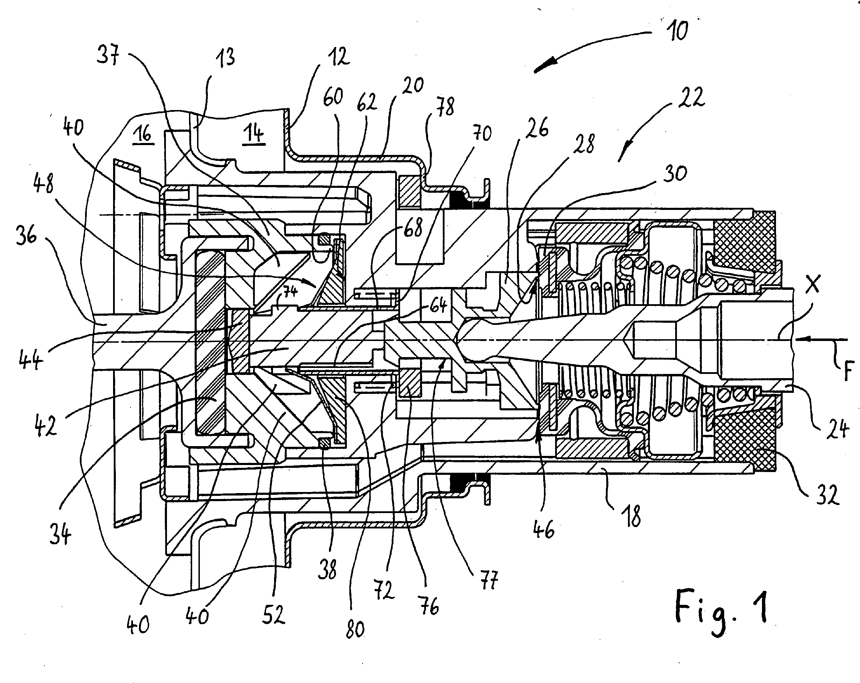

Figur 1 zeigt im Längsschnitt den hier interessierenden Teil eines allgemein mit 10 bezeichneten Unterdruckbremskraftverstärkers für eine hydraulische Kraftfahrzeugbremsanlage. Der Bremskraftverstärker 10, dem ein hier nicht dargestellter Hauptbremszylinder nachgeschaltet ist, hat ein in der Figur nur ansatzweise gezeigtes Gehäuse 12 aus Blechschalen, in dem eine bewegliche Wand 13 eine Arbeitskammer 14 und eine Unterdruckkammer 16 abdichtend voneinander trennt.

Die bewegliche Wand 13 ist mit einem Steuerventilgehäuse 18 fest verbunden, das in einem rohrförmigen Endabschnitt 20 des Bremskraftverstärkergehäuses 12 gleitend verschiebbar geführt ist. Das Steuerventilgehäuse 18 erstreckt sich längs seiner Mittellängsachse X und ist Teil eines Steuerventils 22 zum wahlweisen Verbinden entweder der Arbeitskammer 14 mit der Umgebungsatmosphäre oder der Unterdruckkammer 16 mit der Arbeitskammer 14.

Im Betrieb des Bremskraftverstärkers 10 steht die Unterdruckkammer 16 ständig in Verbindung mit einer Unterdruckquelle, beispielsweise dem Ansaugtrakt eines Verbrennungsmotors, um in der Unterdruckkammer fortwährend einen Unterdruck gegenüber der Umgebungsatmosphäre aufrechtzuerhalten. In einem Ausgangszustand des Bremskraftverstärkers 10 ist auch die Arbeitskammer 14 auf diesen Unterdruck evakuiert. Wird nun das Steuerventil 22 durch Aufbringen einer Eingangskraft F auf ein Eingangsglied 24 betätigt, verschiebt sich das Eingangsglied 24 und ein mit diesem kraftübertragend gekoppelter Ventilkolben 26 in das Bremskraftverstärkergehäuse 12 hinein, d.h. in der Figur nach links. Ein am Ventilkolben 26 ausgebildeter ringförmiger Atmosphärendichtsitz 28 hebt dadurch von einem ringförmigen Ventildichtglied 30 ab und ermöglicht so, dass Atmosphärendruck durch einen Filter 32 in das Steuerventilgehäuse 18 hinein und am jetzt offenen Atmosphärendichtsitz 28 vorbei in die Arbeitskammer 14 strömt. An der die Arbeitskammer 14 von der Unterdruckkammer 16 trennenden beweglichen Wand 13 baut sich somit eine Druckdifferenz auf und die daraus resultierende Kraft trachtet danach, die bewegliche Wand 13 und das mit ihr fest verbundene Steuerventilgehäuse 18 nach links zu verschieben. Diese Kraft ist die vom Bremskraftverstärker 10 erzeugte Hilfs- oder Servokraft. Sie wird über ein gummielastisches Ausgangsglied 34, das in einem dem Hauptzylinder zugewandten Endabschnitt des Steuerventilgehäuses 18 eingekammert ist, an den Hauptzylinder abgegeben, beispielsweise mittels eines nur teilweise dargestellten Stößels 36.

Der das gummielastische Ausgangsglied 34 beherbergende Endabschnitt des Steuerventilgehäuses 18 ist im dargestellten Ausführungsbeispiel als separater, kolbenförmiger Einsatz 37 ausgebildet, der wie gezeigt in den Grundkörper des Steuerventilgehäuses 18 eingesetzt und mittels einer O-Ringdichtung 38 abgedichtet ist. Der Einsatz 37 besteht hier aus Kunststoff und ist in seinem dem Eingangsglied 24 zugewandten hohlen inneren Bereich mit Verstärkungsrippen 40 versehen, die einstückig mit dem Einsatz 37 ausgebildet und bezüglich der Umfangsrichtung gleichmäßig in dem genannten hohlen inneren Bereich verteilt sind. In Figur 1 sind drei Verstärkungsrippen 40 gut zu erkennen.

Zwischen dem gummielastischen Ausgangsglied 34 und einem mit dem Ventilkolben 26 zusammenwirkenden Kopplungskolben 42, dessen Aufbau und Funktion später noch näher erläutert wird, ist in dem Einsatz 37 ein Druckstück 44 axial verschieblich angeordnet, über das die auf das Eingangsglied 24 aufgebrachte Eingangskraft F auf das Ausgangsglied 34 übertragen wird. In dem Ausgangsglied 34 werden also die von einem Benutzer aufgebrachte Eingangskraft F und die vom Bremskraftverstärker 10 erzeugte Hilfskraft zusammengeführt und anschließend an den Hauptzylinder abgegeben.

Löst der Benutzer die Bremse wieder, bewegt sich der Ventilkolben 26 zurück nach rechts, stößt gegen das Ventildichtglied 30 und drückt jenes etwas nach rechts, so dass das Ventildichtglied 30 von einem im Steuerventilgehäuse 18 ausgebildeten, ringförmigen Unterdruckdichtsitz 46 abhebt, wodurch eine Verbindung zwischen der Unterdruckkammer 16 und der Arbeitskammer 14 hergestellt ist und die Arbeitskammer 14 wieder evakuiert wird, um den zu Beginn eines Bremsvorgangs erforderlichen Ausgangszustand wieder herzustellen. Diese allgemeine Funktion eines Unterdruckbremskraftverstärkers ist Fachleuten auf diesem Gebiet wohlbekannt und braucht daher nicht weiter erläutert zu werden.

Zur Bereitstellung einer sogenannten Bremsassistentfunktion sind im Steuerventil 22 weitere Bauteile angeordnet, die im folgenden näher erläutert werden. Mit "Bremsassistentfunktion" ist hier gemeint, dass der Bremskraftverstärker 10 einem Benutzer in einer Notbremssituation die höchstmögliche Bremskraftunterstützung, also die höchstmögliche Hilfskraft, zur Verfügung stellt, auch wenn der Benutzer eine entsprechende Eingangskraft F nicht oder jedenfalls nicht über den gesamten Bremsvorgang hinweg aufrechterhält.

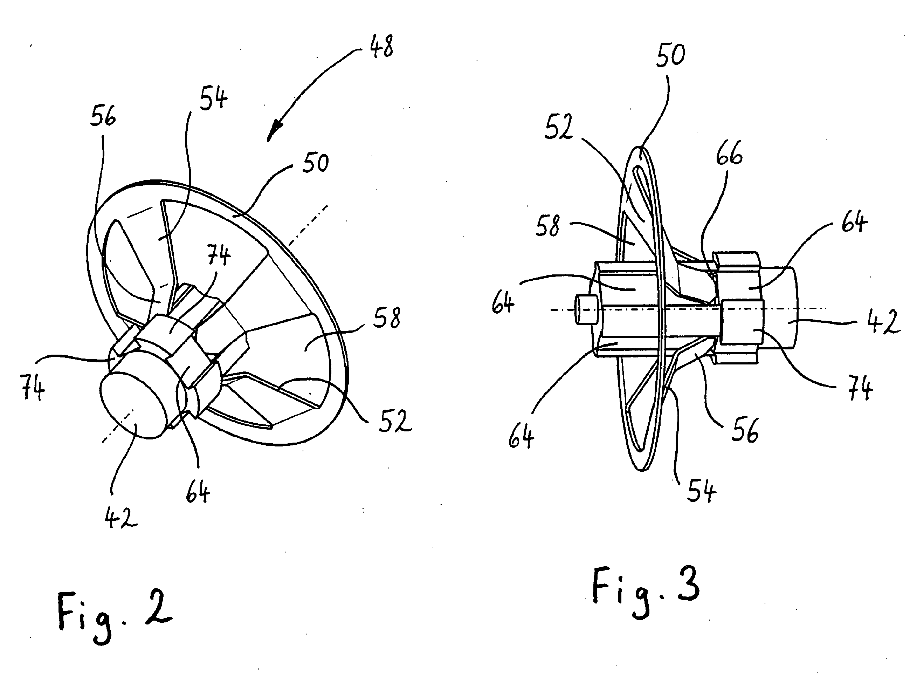

Zur Realisierung dieser Bremsassistentfunktion ist konzentrisch zum Kopplungskolben 42 ein hier aus Federstahl bestehendes Kopplungsbauteil 48 angeordnet, dessen Aufbau genauer aus den Figuren 2 und 3 ersichtlich ist. Das Kopplungsbauteil 48 hat eine kreisringförmige Basis 50, von der aus sich mehrere federnd elastische Zungen 52 nach innen erstrecken. Jede Federzunge 52 weist einen gegenüber der Basis 50 nach oben geneigten ersten Abschnitt 54 sowie einen sich daran anschließenden zweiten Abschnitt 56 auf, dessen Neigung gegenüber der Basis 50 größer ist als die Neigung des ersten Abschnitts 54. Die Federzungen 52 sind einstückig mit der Basis 50 des Kopplungsbauteils 48 ausgebildet. Die Breite jeder Federzunge 52 nimmt ausgehend von der Basis 50 zum freien Ende der Federzunge 52 hin ab. Zwischen den einzelnen Federzungen 52 befinden sich Zwischenräume 58. Das Kopplungsbauteil 48 hat somit einen insgesamt in etwa umgekehrt tellerförmigen Querschnitt, der sich in Richtung des Druckstücks 44 konisch verjüngt. Die Basis 50 des Kopplungsbauteils 48 ist von einem ersten Anschlag 60, der durch das freie Ende des Einsatzes 37 gebildet ist, und einen zweiten Anschlag 62, der von einer Durchmesserverringerung einer zentralen Bohrung des Steuerventilgehäuses 18 gebildet ist, im Wesentlichen ortsfest bezüglich einer Axialverschiebung längs der Achse X des Steuerventilgehäuses 18 gehalten.

Zum Zusammenwirken mit dem Kopplungskolben 42 sind die Federzungen 52 radial einwärts bezüglich der Achse X federnd vorgespannt. Der Kopplungskolben 42 ist auf seiner Außenseite mit einer der Anzahl der Federzungen 52 entsprechenden Zahl von Längsnuten 64 versehen, in denen die freien Enden der Federzungen 52 gleitend geführt sind (siehe insbesondere Figuren 2 und 3). Jede Längsnut 64 weist einen Rastvorsprung 66 auf, hinter dem das freie Ende der zugehörigen, in der Längsnut 64 geführten Federzunge 52 bei Überschreiten einer vorbestimmten Verschiebung des Kopplungskolbens 42 relativ zum Kopplungsbauteil 48 verrasten kann.

Eine im Wesentlichen hohlzylindrische Entkoppelungshülse 68 ist mit ihrer Außenseite gleitend in einem nicht näher bezeichneten Bohrungsabschnitt des Steuerventilgehäuses 18 axial verschieblich geführt. An dem dem Eingangsglied 24 zugewandten Ende der Entkoppelungshülse 68 ist ein radial nach außen vorstehender Flansch 70 ausgebildet, an dem sich ein Ende einer Feder 72 abstützt, deren entgegengesetztes anderes Ende sich am Steuerventilgehäuse 18 abstützt. Die Feder 72 spannt die Entkoppelungshülse 68 in Richtung auf das Eingangsglied 24 vor. Neben ihrer eigentlichen Aufgabe, die im Folgenden noch näher beschrieben wird, dient die Entkoppelungshülse 68 auch zur Führung des Kopplungskolbens 42, der in der in Figur 1 wiedergegebenen Ausgangsstellung mit einem großen Teil seiner Längserstreckung in der Entkopplungshülse 68 aufgenommen ist. In dieser Ausgangsstellung stößt die Entkoppelungshülse 68 mit ihrem freien Ende gegen einen Anschlag am Kopplungskolben 42, der durch auf Höhe der Rastvorsprünge 66 angeordnete Vorsprünge 74 des Kopplungskolbens 42 gebildet ist, die gleichmäßig voneinander beanstandet um den Umfang des Kopplungskolbens 42 herum angeordnet sind und zwischen sich den jenseits eines Rastvorsprunges 66 befindlichen Teil einer Längsnut 64 begrenzen.

Im Folgenden wird die Funktion des Bremskraftverstärkers 10 und insbesondere des Steuerventils 22 erläutert. In der in Figur 1 wiedergegebenen Ausgangsstellung des Bremskraftverstärkers 10 bzw. des Steuerventils 22 stützt sich der Flansch 70 der mittels der Feder 72 vorgespannten Entkoppelungshülse 68 an einem Querriegel 76 ab, der mit dem Ventilkolben 26 verbunden und in einer Nut 77 des Ventilkolbens 26 axial verschieblich ist. Der Querriegel 76 ist also in der Nut 77 des Ventilkolbens 26 schwimmend aufgenommen und dient dazu, eine Ausgangsstellung des Steuerventils 22 festzulegen, indem sein freies Ende sich in der Ausgangsstellung an einem Anschlag 78 des Bremskraftverstärkergehäuses 12 abstützt. Diese Ausgangsstellung wird auch als LTF-Stellung (Lost-Travel-Free Stellung) bezeichnet. Aus dieser Ausgangsstellung heraus ist der Bremskraftverstärker 10 ohne Totweg betätigbar.

In der in Figur 1 gezeigten Ausgangsstellung sind der Atmosphärendichtsitz 28 und der Unterdruckdichtsitz 46 geschlossen und der Kopplungskolben 42 liegt einerseits am Ventilkolben 26 und andererseits am Druckstück 44 an. Die Entkoppelungshülse 68 stößt mit ihrem kreisringförmigen freien Ende gegen den durch die Vorsprünge 74 des Kopplungskolbens 42 gebildeten Anschlag und drückt in dieser Stellung die Federzungen 52 des Kopplungsbauteils 48 radial nach außen außer Eingriff mit dem Längsnuten 64 des Kopplungskolbens 42. Aufgrund der Führung des Kopplungskolbens 42 in der Entkoppelungshülse 68 und der radial schwimmenden Lagerung des Kopplungsbauteils 48 zentriert letzteres sich selbsttätig bezüglich der Entkoppelungshülse 68 und damit auch bezüglich des Kopplungskolbens 42, sodass in dieser Stellung die freien Enden der Federzungen 52 nicht oder allenfalls ganz leicht am Kopplungskolben 42 anliegen.

Wird nun ein Bremsvorgang eingeleitet, verschiebt sich der Ventilkolben 26 relativ zum Steuerventilgehäuse 18, wodurch der Atmosphärendichtsitz 28 geöffnet wird. Da die Entkoppelungshülse 68 durch die Kraft der Feder 72 ständig in Anlage am Querriegel 76 gehalten wird, bewegt sich der Querriegel 76 ausgehend von seiner in Figur 1 dargestellten Position, in der er am bezüglich Figur 1 linken Ende der Nut 77 anliegt, in der Nut 77 relativ zum Ventilkolben 26 nach rechts. Anders ausgedrückt schiebt sich der vom Ventilkolben 26 mitbewegte Kopplungskolben 42 etwas aus der Entkoppelungshülse 68 heraus. Im weiteren Verlauf einer Bremsung folgt das Steuerventilgehäuse 18 aufgrund des Aufbaus der entsprechenden Hilfskraft im Bremskraftverstärker 10 der Bewegung des Ventilkolbens 26 nach, bewegt sich also in Fig. 1 nach links. Bleibt bei dem beschriebenen Vorgang die Relativverschiebung zwischen dem Kopplungsbauteil 48 und der Entkoppelungshülse 68 klein genug, bewegen sich bei einer solchen Normalbremsung die freien Enden der Federzungen 52 lediglich im jenseits der Rastvorsprünge 66 gelegenen Bereich der Längsnuten 64 hin und her. Bei einer weiteren Erhöhung der Eingangskraft F löst sich schließlich der Querriegel 76 von dem Anschlag 78 am Bremskraftverstärkergehäuse 12 und schlägt im weiteren Verlauf am bezüglich Figur 1 rechten Ende der Nut 77 an. Erhöht ein Benutzer des Bremskraftverstärkers 10 die Eingangskraft F nicht weiter, stellt sich ein der jeweiligen Bremsintensität zugehöriger Gleichgewichtszustand ein, in dem der Atmosphärendichtsitz 28 wieder am Ventildichtglied 30 anliegt.

Hat sich der Querriegel 76 vom Anschlag 78 des Bremskraftverstärkergehäuses 12 gelöst und liegt der Querriegel 76 in der Nut 77 des Ventilkolbens 26 am in Figur 1 rechten Anschlag an, dann ist die Entkoppelungshülse 68 bezüglich des Kopplungskolbens 42 so weit zurückverschoben, dass das freie Ende der Entkoppelungshülse 68 nicht mehr mit den Federzungen 52 in Eingriff ist. Stattdessen liegen nun aufgrund der radial einwärts gerichteten Vorspannung der Federzungen 52 die freien Enden derselben mit dem durch die Federvorspannung bewirkten Druck in den jenseits der Rastvorsprünge 66 gelegenen Bereichen der Längsnuten 64 des Kopplungskolbens 42 an. Diese Stellung wird als Bereitschaftsstellung bezeichnet, denn in dieser Bereitschaftsstellung sind die freien Enden der Federzungen 52 zum Verrasten hinter den Rastvorsprüngen 66 bereit. Erst wenn die Relativverschiebung des Ventilkolbens 26 und damit des Kopplungskolbens 42 zum Steuerventilgehäuse 18 ein bestimmtes Maß überschreitet, wir z.B. bei einer Notbremsung der Fall, überfahren die freien Enden der Federzungen 52 die Rastvorsprünge 66 und schnappen in den diesseits bzw. unterhalb der Rastvorsprünge 66 gelegenen Teil der Längsnuten 64. Wird nun die auf das Eingangsglied 24 wirkende Betätigungskraft F etwas reduziert, beispielsweise weil ein Fahrer nicht dazu in der Lage ist, den anfangs aufgebrachten hohen Druck über längere Zeit aufrecht zu erhalten, bewegt sich der Kopplungskolben 42 etwas entgegen der Betätigungsrichtung zurück und die freien Enden der Federzungen 52 geraten in Eingriff mit den Rastvorsprüngen 66. Dieser Zustand wird als Haltestellung bezeichnet.

Die in der Haltestellung erreichte mechanische Koppelung zwischen dem Kopplungsbauteil 48 und dem Steuerventilgehäuse 18 bewirkt, dass nun alle vom hydraulischen Bremssystem über das Druckstück 44 zurückwirkenden Reaktionskräfte nicht mehr auf den Ventilkolben 26 und damit zurück über das Eingangsglied 24 auf das Bremspedal wirken, sondern über das Druckstück 44, den Kopplungskolben 42 und das Kopplungsbauteil 48 in das Steuerventilgehäuse 18 eingeleitet werden. Das bedeutet, dass sämtliche Reaktionskräfte vom Bremskraftverstärker 10 allein aufgefangen werden, solange der Ventilkolben 26 sich entweder vom Kopplungskolben 42 gelöst hat oder kraftfrei am Kopplungskolben 42 anliegt. In diesem Zustand kann deshalb der Atmosphärendichtsitz geöffnet gehalten werden, ohne dass der Benutzer des Bremskraftverstärkers 10 nennenswerte Gegenkräfte überwinden muss. Anders ausgedrückt entspricht dieser Zustand einer Änderung des Kraftübersetzungsverhältnisses des Bremskraftverstärkers gegen unendlich.

Um zu verhindern, dass bei sehr großen Rückwirkungskräften die Federzungen 52 sich durchbiegen oder sogar brechen, ist das Kopplungsbauteil 48 wie dargestellt mit einem Stützteil 80 unterlegt. Das Stützteil 80, das zwischen dem zweiten Anschlag 62 und dem Kopplungsbauteil 48 im Steuerventilgehäuse 18 ebenfalls radial beweglich aufgenommen ist, ist auf seiner dem Kopplungsbauteil 48 zugewandten Seite der Form des Kopplungsbauteils 48 angepasst, sodass sich insbesondere die ersten geneigten Abschnitte 54 der Federzungen 52 unter Belastung an das Stützteil 80 anliegen und sich somit gut abstützen können. Das Stützteil 80 ist in der Mitte mit einer Durchgangsöffnung versehen, um den Durchtritt des Kopplungskolbens 42 und der Entkoppelungshülse 68 zu ermöglichen.

Will ein Benutzer des Bremskraftverstärkers 10 eine Notbremsung beenden, im Verlaufe derer es zu der beschriebenen starren Koppelung des Druckstücks 42 mit dem Steuerventilgehäuse 18 gekommen ist, reduziert er die auf das Eingangsglied 24 ausgeübte Eingangskraft F entsprechend, woraufhin sich der Kopplungskolben 40 vom Druckstück 42 trennt, der Atmosphärendichtsitz 28 sich wieder an das Ventildichtglied 30 anlegt und Letzteres entgegen der Betätigungsrichtung etwas nach rechts verlagert, wodurch sich der Unterdruckdichtsitz 46 vom Ventildichtglied 30 abhebt und eine Verbindung zwischen der Arbeitskammer 14 und der Unterdruckkammer 16 hergestellt ist. Infolge dieser Verbindung wird die Druckdifferenz an der beweglichen Wand 13 des Bremskraftverstärkers 10 verringert und das Steuerventilgehäuse 18 bewegt sich zurück nach rechts. Sobald sich der Querriegel 76 am Anschlag 78 abstützt, kann sich auch die Entkoppelungshülse 68 nicht weiter nach rechts bewegen, so dass bei einem weiteren Rückhub des Steuerventilgehäuses 18 das ringförmige freie Ende der Entkoppelungshülse 68 von innen gegen die Federzungen 52 stößt und diese radial nach außen drängt. Anders ausgedrückt laufen die Innenflächen der Federzungen 52 auf das Ende der Entkoppelungshülse 68 auf und werden bei einer weiteren Rückbewegung des Steuerventilgehäuses 18 dann zwangsweise radial nach außen und somit außer Eingriff mit den Rastvorsprüngen 66 des Kopplungskolbens 42 gedrängt. Der Verrastungszustand wird auf diese Weise gelöst und es stellt sich der bereits beschriebene, in Fig. 1 gezeigte Ausgangszustand wieder ein.

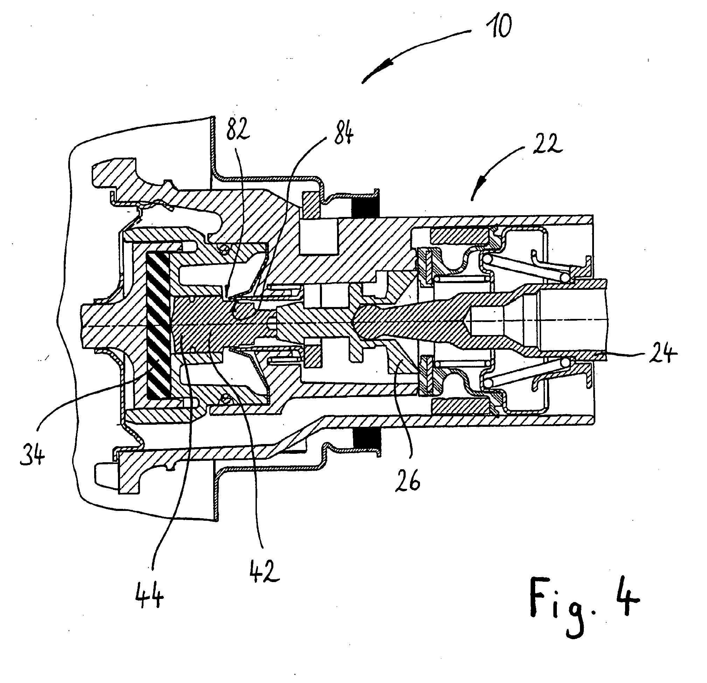

In Figur 4 ist eine gegenüber dem in Figur 1 gezeigten Ausführungsbeispiel leicht abgewandelte Ausführungsform des Bremskraftverstärkers 10 dargestellt. Die wesentlichen Unterschiede zur zuvor beschriebenen ersten Ausführungsform bestehen in einer einstückigen Ausbildung von Kopplungskolben 42 und Druckstück 44 sowie in dem Wegfall der Längsnuten 64 zur Führung der freien Enden der Federzungen 52. Stattdessen gleiten die freien Enden der Federzungen 52 in dem Ausführungsbeispiel gemäß Figur 4 lediglich auf einem Abschnitt 82 der Mantelfläche des Kopplungskolbens 42. Dieser Abschnitt 82 weist einen hier ringförmigen Rastvorsprung 84 auf, dessen Funktion der Funktion der Rastvorsprünge 66 des ersten Ausführungsbeispiels entspricht. Im dargestellten Ausführungsbeispiel ist der Rastvorsprung 84 durch eine Stufe gebildet, die sich aus einer Durchmesserverringerung des Abschnitts 82 des Kopplungskolbens 42 ergibt. Alternativ kann der Rastvorsprung 84 aber auch auf andere Art gebildet sein, z.B. durch einen auf dem Abschnitt 82 der Mantelfläche des Kopplungskolbens 42 ausgebildeten Vorsprung. Ferner braucht der Rastvorsprung 84 nicht ringförmig zu sein, sondern kann nur in Bereichen vorgesehen sein, die von den freien Enden der Federzungen 52 überfahren werden.

Die Funktion des in Figur 4 dargestellten zweiten Ausführungsbeispiels stimmt mit der Funktion des ersten Ausführungsbeispiels überein und wird daher nicht nochmals beschrieben.

## Patentansprüche

1. Bremskraftverstärker (10), insbesondere für Kraftfahrzeuge, mit einem Steuerventil (22) zum Steuern der vom Bremskraftverstärker erzeugten Verstärkungskraft, das ein Steuerventilgehäuse (18), ein Eingangsglied (24), ein Ausgangsglied (34) und ein zwischen dem Eingangsglied (24) und dem Ausgangsglied (34) angeordnetes, auf das Ausgangsglied (34) wirkendes Druckstück (44) aufweist, das in Abhängigkeit
einer von dem Eingangsglied (24) längs einer Hauptachse (X) des Steuerventils (22) hervorgerufenen Relativbewegung zwischen dem Druckstück (44) und dem Steuerventilgehäuse (18) mittels eines von einer Feder vorgespannten Kupplungselementes lösbar an dem Steuerventilgehäuse (18) abgestützt ist,
**dadurch gekennzeichnet, dass** die Feder und das Kupplungselement als einstückiges Kopplungsbauteil (48) ausgeführt sind, das im Steuerventilgehäuse (18) radial beweglich bezüglich der Hauptachse (X) abgestützt ist.

2. Bremskraftverstärker nach Anspruch 1,
**dadurch gekennzeichnet, dass** das Kopplungsbauteil (48) einen mit dem Eingangsglied (24) und dem Druckstück (44) in Wirkverbindung stehenden Kopplungskolben (42) konzentrisch umgibt.

3. Bremskraftverstärker nach Anspruch 2,
**dadurch gekennzeichnet, dass** das Druckstück (44) und der Kopplungskolben (42) eine einstückige Einheit bilden.

4. Bremskraftverstärker nach Anspruch 2 oder 3,
**dadurch gekennzeichnet, dass** das Kopplungsbauteil (48) sich in Richtung des Druckstücks (44) konisch verjüngt.

5. Bremskraftverstärker nach Anspruch 4,
**dadurch gekennzeichnet, dass** das Kopplungsbauteil (48) im Bereich seiner konischen Verjüngung mehrere radial einwärts vorgespannte Federzungen (52) aufweist.

6. Bremskraftverstärker nach Anspruch 5,
**dadurch gekennzeichnet, dass** der Kopplungskolben (42) Längsnuten (64) aufweist, in denen die freien Enden der Federzungen (52) gleitend geführt sind.

7. Bremskraftverstärker nach Anspruch 6,
**dadurch gekennzeichnet, dass** jede Längsnut (64) einen Rastvorsprung (66) aufweist, hinter dem das freie Ende der zugehörigen Federzunge (52) bei Überschreiten einer vorbestimmten Verschiebung des Druckstücks (44) relativ zum Steuerventilgehäuse (18) in Richtung auf das Ausgangsglied (34) verrastet.

8. Bremskraftverstärker nach Anspruch 5,
**dadurch gekennzeichnet, dass** die freien Enden der Federzungen (52) auf einem Abschnitt (82) der Mantelfläche des Kopplungskolbens (42) gleiten.

9. Bremskraftverstärker nach Anspruch 8,
**dadurch gekennzeichnet, dass** der Abschnitt (82) der Mantelfläche des Kopplungskolbens (42) einen Rastvorsprung (84) aufweist, hinter dem die freien Enden der Federzungen (52) bei Überschreiten einer vorbestimmten Verschiebung des Druckstücks (44) relativ zum Steuerventilgehäuse (18) in Richtung auf das Ausgangsglied (34) verrasten.

10. Bremskraftverstärker nach einem der vorhergehenden Ansprüche,
**dadurch gekennzeichnet, dass** ein radial äußerer Umfangsrand des Kopplungsbauteils (48) von im Steuerventilgehäuse (18) vorhandenen Anschlägen (60, 62) in Richtung der Hauptachse (X) im Wesentlichen ortsfest bezüglich des Steuerventilgehäuses (18) gehalten ist.

11. Bremskraftverstärker nach Anspruch 10,
**dadurch gekennzeichnet, dass** das Kopplungsbauteil (48) einen insgesamt tellerförmigen Querschnitt hat.

12. Bremskraftverstärker nach Anspruch 10 oder 11,
**dadurch gekennzeichnet, dass** zur Abstützung des Kopplungsbauteils (48) unter Last ein Stützteil (80) zwischen einem das Kopplungsbauteil (48) entgegen der Betätigungsrichtung des Bremskraftverstärkers abstützenden Anschlag (62) und dem Kopplungsbauteil (48) angeordnet ist.

13. Bremskraftverstärker nach Anspruch 12,
**dadurch gekennzeichnet, dass** das Stützteil (80) einen zumindest annähernd tellerförmigen Querschnitt aufweist.

14. Bremskraftverstärker nach einem der vorhergehenden Ansprüche in Verbindung mit Anspruch 6 oder 8,
**dadurch gekennzeichnet, dass** auf dem Kopplungskolben (42) eine Entkoppelungshülse (68) verschiebbar angeordnet ist, deren eines, dem Eingangsglied (24) zugewandtes Ende dazu ausgebildet ist, sich an einem mit einem Ventilkolben (26) verbundenen Querriegel (76) abzustützen, und deren anderes Ende dazu ausgebildet ist, bei einer Verschiebung des Steuerventilgehäuses (18) relativ zur Entkoppelungshüise (68) in Richtung auf das Eingangsglied (24) in Berührung mit dem Kopplungsbauteil (48) zu geraten und die freien Enden der Federzungen (52) radial auswärts zu drücken, um letztere aus ihrer Raststellung hinter dem Rastvorsprung (84) oder den Rastvorsprüngen (66) des Kopplungskolbens (42) zu lösen.

15. Bremskraftverstärker nach Anspruch 14,
**dadurch gekennzeichnet, dass** die Entkoppelungshülse (68) federnd in Richtung auf das Eingangsglied (24) vorgespannt ist.

16. Bremskraftverstärker nach Anspruch 14 oder 15,
**dadurch gekennzeichnet, dass** die Entkoppelungshülse (68) in einem Bohrungsabschnitt des Steuerventilgehäuses (18) gleitend aufgenommen ist.

17. Bremskraftverstärker nach einem der vorhergehenden Ansprüche,
**dadurch gekennzeichnet, dass** das Kopplungsbauteil (48) aus Federstahl besteht.

## Claims

1. Brake booster (10), in particular for motor vehicles, having a control valve (22) for controlling the boosting force generated by the brake booster, which control valve comprises a control valve housing (18), an input element (24), an output element (34) and a thrust piece (44), which is disposed between the input element (24) and the output element (34) and acts upon the output element (34) and which in dependence upon a relative movement between the thrust piece (44) and the control valve housing (18) caused by the input element (24) along a principal axis (X) of the control valve (22) is releasably supported against the control valve housing (18) by means of a coupling element biased by a spring,
**characterized in that** the spring and the coupling element are designed as a one-piece coupling component (48), which is supported in the control valve housing (18) so as to be radially movable relative to the principal axis (X).

2. Brake booster according to claim 1,
**characterized in that** the coupling component (48) concentrically surrounds a coupling piston (42) that is workingly connected to the input element (24) and the thrust piece (44).

3. Brake booster according to claim 2, **characterized in that** the thrust piece (44) and the coupling piston (42) form a one-piece unit.

4. Brake booster according to claim 2 or 3,
**characterized in that** the coupling component (48) tapers conically in the direction of the thrust piece (44).

5. Brake booster according to claim 4,
**characterized in that** the coupling component (48) comprises a plurality of radially inwardly biased spring tongues (52) in the region of its conical taper.

6. Brake booster according to claim 5,
**characterized in that** the coupling piston (42) comprises longitudinal grooves (64) in which the free ends of the spring tongues (52) are guided in sliding manner.

7. Brake booster according to claim 6,
**characterized in that** each longitudinal groove (64) has a detent projection (66), behind which the free end of the associated spring tongue (52) catches when a predetermined displacement of the thrust piece (44) relative to the control valve housing (18) in the direction of the output element (34) is exceeded.

8. Brake booster according to claim 5,
**characterized in that** the free ends of the spring tongues (52) slide on a section (82) of the casing surface of the coupling piston (42).

9. Brake booster according to claim 8,
**characterized in that** the section (82) of the casing surface of the coupling piston (42) is provided with a detent projection (84) behind which the free ends of the spring tongues (52) catch when a predetermined displacement of the thrust piece (44) relative to the control valve housing (18) in the direction of the output member (34) is exceeded.

10. Brake booster according to one of the preceding claims,
**characterized in that** a radially outer circumferential edge of the coupling component (48) is held in the direction of the principal axis (X) substantially stationary relative to the control valve housing (18) by means of stops (60, 62) provided in the control valve housing (18)..

11. Brake booster according to claim 10,
**characterized in that** the coupling component (48) has an, as a whole, plate-shaped cross-section.

12. Brake booster according to claim 10 or 11,
**characterized in that** for supporting the coupling component (48) under load a support part (80) is disposed between a stop (62) supporting the coupling component (48) counter to the actuating direction of the brake booster and the coupling component (48).

13. Brake booster according to claim 12,
**characterized in that** the support part (80) has an at least approximately plate-shaped cross section.

14. Brake booster according to one of the preceding claims in conjunction with claim 6 or 8,
**characterized in that** on the coupling piston (42) an uncoupling sleeve (68) is displaceably disposed, of which the one end facing the input element (24) is designed so as to be supported against a cross bracket (76) connected to a valve piston (26) and the other end is designed so as, upon a displacement of the control valve housing (18) relative to the uncoupling sleeve (68) in the direction of the input element (24), to come into contact with the coupling component (48) and press the free ends of the spring tongues (52) radially outwardly in order to release the spring tongues from their detent position behind the detent projection (84) or the detent projections (66) of the coupling piston (42).

15. Brake booster according to claim 14,
**characterized in that** the uncoupling sleeve (68) is resiliently biased in the direction of the input element (24).

16. Brake booster according to claim 14 or 15, **characterized in that** the uncoupling sleeve (68) is received in sliding manner in a bore portion of the control valve housing (18).

17. Brake booster according to one of the preceding claims, **characterized in that** the coupling component (48) consists of spring steel.

## Revendications

1. Dispositif de freinage assisté (10), destiné particulièrement aux véhicules automobiles, équipé d'une soupape de commande (22) servant à contrôler la force d'assistance produite par le dispositif de freinage assisté, présentant un corps de soupape de commande (18), un organe d'entrée (24), un organe de sortie (34) et un élément de pression (44) disposé entre l'organe d'entrée (24) et l'organe de sortie (34) agissant sur l'organe de sortie (34), l'élément de pression étant appuyé, de façon amovible, contre le corps de la soupape de commande (18) au moyen d'un élément de couplage précontraint par un ressort, en fonction d'un mouvement relatif entre l'élément de pression (44) et le corps de la soupape de commande (18) déclenché par l'organe d'entrée (24) le long d'un axe principal (X) de la soupape de commande (22), **caractérisé en ce que** le ressort et l'élément de couplage sont réalisés sous la forme d'un composant de couplage (48) monobloc appuyé contre le corps de la soupape de commande (18) et capable de se mouvoir radialement par rapport à l'axe principal (X).

2. Dispositif de freinage assisté selon la revendication 1, **caractérisé en ce que** le composant de couplage (48) entoure concentriquement un piston de couplage (42) qui est en liaison fonctionnelle avec l'organe d'entrée (24) et l'élément de pression (44).

3. Dispositif de freinage assisté selon la revendication 2, **caractérisé en ce que** l'élément de pression (44) et le piston de couplage (42) constituent une unité monobloc.

4. Dispositif de freinage assisté selon la revendication 2 ou 3, **caractérisé en ce que** le composant de couplage (48) est effilé en forme de cône en direction de l'élément de pression (44).

5. Dispositif de freinage assisté selon la revendication 4, **caractérisé en ce que** le composant de couplage (48) présente dans la région de son effilement conique plusieurs lames flexibles (52) précontraintes radialement vers l'intérieur.

6. Dispositif de freinage assisté selon la revendication 5, **caractérisé en ce que** le piston de couplage (42) présente des rainures longitudinales (64) dans lesquelles les extrémités libres des lames flexibles (52) coulissent.

7. Dispositif de freinage assisté selon la revendication 6, **caractérisé en ce que** chaque rainure longitudinale (64) présente une protubérance d'enclenchement (66) derrière laquelle l'extrémité libre de la lame flexible (52) correspondante s'enclenche lorsque le déplacement de l'élément de pression (44) dépasse une course prédéfinie par rapport au corps de la soupape de commande (18) dans la direction de l'organe de sortie (34).

8. Dispositif de freinage assisté selon la revendication 5, **caractérisé en ce que** les extrémités libres des lames flexibles (52) coulissent sur une partie (82) de l'enveloppe du piston de couplage (42).

9. Dispositif de freinage assisté selon la revendication 8, **caractérisé en ce que** la partie (82) de l'enveloppe du piston de couplage (42) présente une protubérance d'enclenchement (84) derrière laquelle les extrémités libres des lames flexibles (52) s'enclenchent lorsque le déplacement de l'élément de pression (44) dépasse une course prédéfinie par rapport au corps de la soupape de commande (18) dans la direction de l'organe de sortie (34).

10. Dispositif de freinage assisté selon l'une quelconque des revendications précédentes, **caractérisé en ce qu'**une bride radiale périphérique externe de l'élément de couplage (48) est maintenue sensiblement stationnaire par rapport au corps de la soupape de commande (18) dans la direction de l'axe principal (X) par des butées (60, 62) présentes dans le corps de la soupape de commande (18).

11. Dispositif de freinage assisté selon la revendication 10, **caractérisé en ce que** le composant de couplage (48) possède une section transversale globalement concave.

12. Dispositif de freinage assisté selon la revendication 10 ou 11, **caractérisé en ce qu'**un support (80) est disposé entre une butée (62) appuyant sur l'élément de couplage (48) dans la direction contraire à la direction de fonctionnement du dispositif de freinage assisté et l'élément de couplage (48) afin de supporter l'élément de couplage (48) en charge.

13. Dispositif de freinage assisté selon la revendication 12, **caractérisé en ce que** le support (80) présente une section transversale au moins approximativement concave.

14. Dispositif de freinage assisté selon l'une quelconque des revendications précédentes en association avec la revendication 6 ou 8, **caractérisé en ce qu'**une gaine de désaccouplement (68) coulissante est disposée sur le piston de couplage (42), une première extrémité de cette gaine, orientée vers l'organe d'entrée (24), est formée de telle sorte qu'elle s'appuie contre une barre transversale (76) reliée à un piston de soupape (26), et l'autre extrémité est formée de telle sorte que, lorsque le corps de la soupape de commande (18) se déplace par rapport à la gaine de désaccouplement (68) dans la direction de l'organe d'entrée (24), elle entre en contact avec l'élément de couplage (48) et appuie sur les lames flexibles (52) radialement vers l'extérieur afin de les libérer de leur position d'enclenchement derrière la protubérance d'enclenchement (84) ou les protubérances d'enclenchement (66) du piston de couplage (42).

15. Dispositif de freinage assisté selon la revendication 14, **caractérisé en ce que** la gaine de désaccouplement (68) est précontrainte élastiquement en direction de l'organe d'entrée (24).

16. Dispositif de freinage assisté selon la revendication 14 ou 15, **caractérisé en ce que** la gaine de désaccouplement (68) coulisse dans une section alésée du corps de la soupape de commande (18).

17. Dispositif de freinage assisté selon une quelconque des revendications précédentes, **caractérisé en ce que** l'élément de couplage (48) est fabriqué en acier à ressort.
